# FASCICULE DE BREVET EUROPEEN

(11) **EP 1 367 226 B1**
(45) Date de publication et mention de la délivrance du brevet: **30.08.2006**
(21) Numéro de dépôt: 03291230.5
(22) Date de dépôt: 23.05.2003
(51) Int. Cl.: F01D 21/04, G01H 1/08, G01M 1/22, G01H 1/00

(54) **Procédé et système de détection d'endommagement de rotor d'un moteur d'aéronef**
Verfahren und System zur Erkennung eines Rotorschadens in einem Flugzeugtriebwerk
Method and system for damage detection of an aircraft engine rotor

(30) Priorité: 28.05.2002 FR 0206530
(43) Date de publication de la demande: 03.12.2003
(73) Titulaire: SNECMA, 75015 Paris (FR); SNECMA SERVICES, 75015 Paris (FR)
(72) Inventeur: Comperat, Patrick, 77210 Avon (FR); Even, Philippe, 27620 Sainte Geneviève les Gasny (FR)
(74) Mandataire: Joly, Jean-Jacques

(56) Documents cités:
- EP-A- 1 118 920
- US-A- 4 435 770
- US-A- 4 453 407
- US-A- 5 258 923
- US-A- 6 098 022
- US-B1- 6 263 738

## Description

### Arrière-plan de l'invention

L'invention concerne la détection d'endommagement de rotor d'un moteur d'aéronef.

La réglementation en vigueur dans l'aviation civile, impose de surveiller les vibrations de moteurs d'avions. Cette surveillance s'effectue généralement au moyen d'accéléromètres.

Le signal issu de chaque accéléromètre est d'abord traité afin d'en extraire les composantes fréquentielles correspondant aux vitesses de rotation des rotors des étages basse pression et haute pression. L'amplitude de ces composantes est renvoyée en temps réel au cockpit et quelques valeurs pertinentes sont stockées pour une exploitation ultérieure. En générale, 5 à 10 valeurs par vol dans des conditions stabilisées prédéfinies sont stockés.

Il est décrit dans une demande de brevet US-A-6098022, un procédé de détection d'endommagement de rotor d'un moteur d'aéronef comprenant une acquisition de données relative à la vitesse du rotor ainsi qu'à l'amplitude et à la phase des vibrations du rotor et le calcul d'une différence vectorielle entre un vecteur vibration mesuré et un vecteur vibration de base. De même, une demande de brevet EP-A-1118920 décrit un système utilisant l'amplitude et la phase des vibrations d'un rotor pour détecter l'endommagement d'une machine tournante.

Malheureusement, il arrive qu'un rotor d'un moteur d'avion soit endommagé, comme par exemple, l'arrachement d'aubes sans que l'événement soit décelé du fait du peu de données recueillies.

Aussi, il existe donc un besoin actuel d'un système qui permette sans erreurs la détection de l'endommagement du rotor d'un moteur d'aéronef.

### Objet et résumé de l'invention

L'invention a pour but de fournir un procédé de détection d'endommagement de rotor d'un moteur d'aéronef, afin de garantir le bon fonctionnement du moteur et la sécurité de l'avion.

Un autre but est de fournir un bon diagnostique dans les meilleurs délais afin d'avoir l'équipe de maintenance adaptée au type du problème.

Encore un autre but est la réalisation d'une maintenance préventive.

Ces buts sont atteints grâce à un procédé de détection d'endommagement de rotor d'un moteur d'aéronef comprenant des moyens de mesure de vibration et de vitesse pour l'acquisition de données relatives à la vitesse du rotor ainsi qu'à l'amplitude et à la phase des vibrations du rotor pendant un vol déterminé, et caractérisé en ce qu'il comporte les étapes suivantes :
- lecture desdites données acquises,
- calcul d'un vecteur vibration moyen sur un intervalle de vitesse de rotor déterminé à partir desdites données acquises, l'amplitude dudit intervalle de vitesse rotor déterminé correspondant à une valeur comprise autre 1% et 10% de la vitesse nominale du rotor,
- calcul d'une différence vectorielle entre le vecteur vibration moyen dudit vol déterminé et le vecteur vibration moyen d'un vol de référence pour un même intervalle de vitesse rotor,
- comparaison du module de ladite différence vectorielle avec une valeur seuil prédéterminée, et en ce que lesdites étapes de calcul, de comparaison et d'émission sont réalisées à l'issue dudit vol déterminé.
- émission d'un signal d'alerte lorsque le module de ladite différence vectorielle excède une valeur seuil prédéterminée,
et en ce que lesdites étapes sont réalisées à l'issue dudit vol déterminé.

Le procédé de détection selon l'invention, peut aussi comporter les étapes suivantes:
- calcul d'une deuxième différence vectorielle entre chaque vecteur vibration dudit vol déterminé et le vecteur vibration moyen d'un vol de référence pour un même intervalle de vitesse rotor,
- calcul d'un module de ladite deuxième différence vectorielle associée à chaque vecteur vibration afin de choisir un plus grand module,
- comparaison dudit plus grand module avec la valeur seuil prédéterminée, et
- émission d'un signal d'alerte lorsque ledit plus grand module excède la valeur seuil prédéterminée.

De même, le procédé de détection selon l'invention, peut aussi comporter les étapes suivantes :
- calcul d'une troisième différence vectorielle entre chaque vecteur vibration dudit vol déterminé et le vecteur vibration moyen dudit vol déterminé à un même intervalle de vitesse rotor,
- calcul d'un module de ladite troisième différence vectorielle associée à chaque vecteur vibration afin de choisir un plus grand module,
- comparaison dudit plus grand module avec la valeur seuil prédéterminée, et
- émission d'un signal d'alerte lorsque ledit plus grand module excède la valeur seuil prédéterminée.

Selon une première particularité de l'invention, le vol de référence correspond au vol précédent dudit vol déterminé.

Selon une seconde particularité de l'invention, le vol de référence correspond à un vol associé à un moteur standard de référence.

Avantageusement, le procédé selon l'invention comporte une étape de mise à jour des vecteurs moyens du vol référence à partir des données dudit vol déterminé lorsque le module ou le plus grand module de la différence vectorielle n'excède pas la valeur seuil prédéterminée.

La valeur seuil est prédéterminée selon l'emplacement du moyen de détection de vibration et correspond à une valeur comprise entre 5.07µm (2 mils) et 12.70µm (5 mils).

L'invention a aussi pour but de fournir un système de détection d'endommagement de rotor d'un moteur d'aéronef permettant la mise en oeuvre du procédé défini ci-avant.

Ce but est atteint grâce à système de détection d'endommagement de rotor d'un moteur d'aéronef muni des moyens de mesure de vibration et de vitesse pour l'acquisition de données relatives à la vitesse du rotor ainsi qu'à l'amplitude et à la phase des vibrations du rotor pendant un vol déterminé, et comprenant:
- un moyen de lecture desdites données acquises,
- un moyen de calcul de vecteurs vibrations en fonction de la vitesse du rotor,
- un moyen de calcul d'une pluralité d'intervalles de vitesse de rotor à partir desdites données acquises,
- un moyen de calcul d'un vecteur vibration moyen sur un intervalle de vitesse de rotor déterminé à partir desdites données acquises,
- un moyen de calcul d'une différence vectorielle entre le vecteur vibration moyen dudit vol déterminé et le vecteur vibration moyen d'un vol de référence pour ledit intervalle de vitesse rotor,
- un moyen de comparaison du module de ladite différence vectorielle avec une valeur seuil prédéterminé, et
- un moyen d'émission d'un signal d'alerte lorsque le module de ladite différence vectorielle excède ladite valeur seuil prédéterminée, et
- un moyen de stockage pour stocker lesdites données relatives à la vitesse, l'amplitude et la phase de vibration du rotor pour les traiter à l'issue dudit vol déterminé.

Le système de détection selon l'invention peut aussi comporter :
- un moyen de calcul d'une deuxième différence entre chaque vecteur vibration dudit vol déterminé et le vecteur vibration moyen d'un vol de référence pour un même intervalle de vitesse rotor,
- un moyen de calcul d'un module de ladite deuxième différence vectorielle associée à chaque vecteur vibration et de choisir un plus grand module,
- un moyen de comparaison dudit plus grand module avec la valeur seuil prédéterminée, et
- un moyen d'émission d'un signal d'alerte lorsque ledit plus grand module excède la valeur seuil prédéterminée.

De même le système de détection selon l'invention peut aussi comporter :
- un moyen de calcul d'une troisième différence vectorielle entre chaque vecteur vibration dudit vol déterminé et le vecteur vibration moyen dudit vol déterminé à un même intervalle de vitesse rotor,
- un moyen de calcul d'un module de ladite troisième différence vectorielle associée à chaque vecteur vibration afin de choisir un plus grand module,
- un moyen de comparaison dudit plus grand module avec la valeur seuil prédéterminée, et
- un moyen d'émission d'un signal d'alerte lorsque ledit plus grand module excède la valeur seuil prédéterminée.

Le système de détection comporte au moins un moyen de mesure de vibration sur au moins un plan radial du moteur.

L'invention a aussi pour objet un moteur d'aéronef comprenant un compresseur munis de premiers disques rotatifs et une turbine muni de seconds disques rotatifs, mettant en oeuvre un système de détection défini ci-avant.

Selon un mode de réalisation préféré, le système de détection comprend un premier moyen de mesure de vibration au niveau d'un des premiers disques rotatifs et un second moyen de mesure de vibration au niveau des seconds disques rotatifs.

L'invention a aussi pour but un programme informatique conçu pour mettre en oeuvre le procédé défini ci-avant lorsqu'il est exécuté par un ordinateur.

### Brève description des dessins

L'invention sera mieux comprise à la lecture de la description faite ci-après, à titre indicatif mais non limitatif, en référence aux dessins annexés, sur lesquels :
- la figure 1 est une vue d'un turboréacteur d'aéronef, comportant schématiquement un système de détection d'endommagement de rotor selon l'invention ;
- les figures 2A à 2C illustrent l'enregistrement de données relatives à la vitesse, l'amplitude et la phase respectivement, stockées pendant le vol par l'unité mémoire selon l'invention ;
- la figure 3 est un organigramme illustrant, selon l'invention le procédé de détection d'endommagement de rotor d'un moteur d'aéronef;
- la figure 4 montre une représentation de vecteurs vibrations selon le procédé de la figure 3 ;
- la figure 5 illustre les amplitudes de vecteurs vibrations en fonction de la vitesse selon le procédé de la figure 3 ;
- les figures 6A et 6B illustrent des nuages de points représentant les coordonnées cartésiennes des vecteurs vibrations et de leur vecteurs moyens respectivement, pour un intervalle de vitesse donnée selon le procédé de la figure 3 ;
- les figures 7A et 7B illustrent des différences vectorielles entre des vecteurs moyens d'un vol de référence et les vecteurs moyens d'un vol déterminé selon le procédé de la figure 3 ;
- la figure 8 illustre un cercle limitant une zone seuil selon le procédé de la figure 3 ;
- les figures 9A et 9B illustrent des différences vectorielles entre des vecteurs moyens d'un vol de référence et les vecteurs d'un vol déterminé selon le procédé de la figure 3 ;
- la figure 10 est un organigramme illustrant, selon l'invention le procédé de détection d'endommagement de rotor d'un moteur d'aéronef au cours du vol; et

### Description détaillée de modes de réalisation

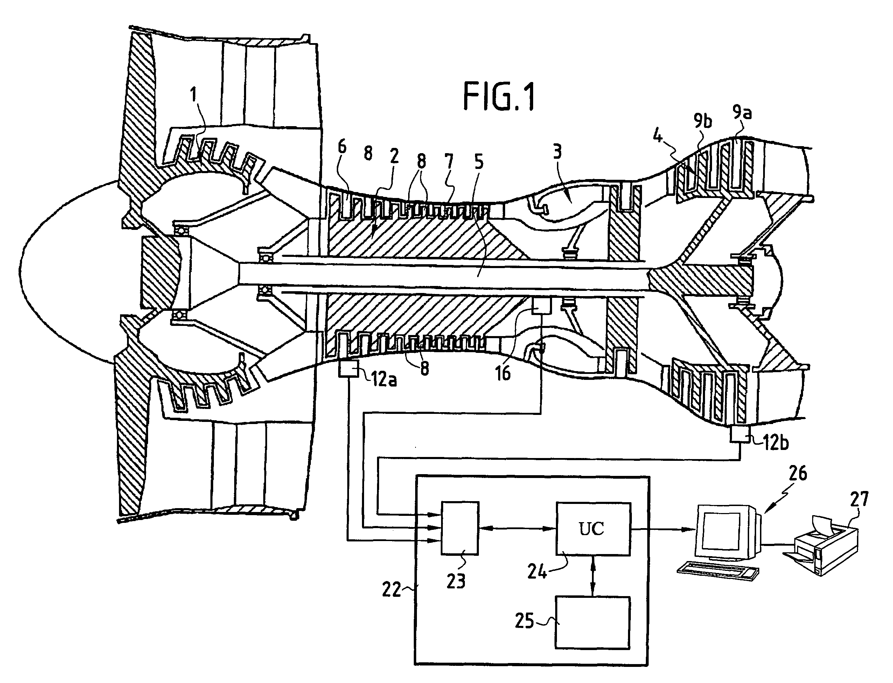

La figure 1 montre une partie d'un moteur d'aéronef, plus particulièrement d'un turboréacteur. Le turboréacteur comprend un compresseur basse pression 1 et un compresseur haute pression 2 qui fournissent un débit d'air comprimé à une chambre de combustion 3 afin d'assurer une combustion continue du combustible. Les gaz à haute pression et haute température s'échappent à grande vitesse par une tuyère (non représentée). Les compresseurs sont entraînés par une turbine 4 qui prélève et transforme une partie de l'énergie du gaz comprimé et chaud en une énergie mécanique.

Chaque compresseur comprend une partie tournante ou rotor 5, une partie fixe ou stator 6 et une enveloppe ou carter 7. Le rotor comprend un tambour constitué par l'assemblage de plusieurs disques, sur lesquels sont fixées des aubes mobiles 8. Le stator est constitué de plusieurs rangées d'aubes fixes qui peuvent être fixées sur le carter 7.

La turbine 4 comprend un ou plusieurs étages où chaque étage se compose d'une grille d'aubes fixes 9a et d'une grille d'aubes mobiles 9b fixées sur un disque.

En fonctionnement, les différentes aubes sont soumises aux efforts aérodynamiques. De plus, les aubes mobiles 8 et 9b sont soumises à la force centrifuge qui est proportionnelle au carré de la vitesse de rotation. Ainsi, les aubes et leur attache sur le disque sont dimensionnées pour les plus sévères conditions de fonctionnement.

L'aube étant une sorte de lamelle, peut vibrer à une fréquence propre qui dépend de sa forme, de ses dimensions et de son mode de fixation sur le disque.

Ces vibrations peuvent être excitées par des sillages qui naissent au bord de fuite des aubes, par des forces mécaniques prenant naissance dans le rotor lorsque celui-ci présente des balourds trop importants ou par des instabilités aérodynamiques. Par conséquent, les vibrations entretenues qui en résultent peuvent entraîner la rupture ou la perte d'une ou de plusieurs aubes.

Ainsi, certains endommagements de pièces tournantes génèrent une modification brutale du balourd du rotor correspondant et par conséquent, de la vibration.

En générale, les vibrations de moteurs sont surveillées par des accéléromètres ou autres capteurs de vibration. Chaque capteur peut être composé de deux accéléromètres faisant entre eux un angle, de préférence de 90°, dans un plan radial du moteur. Les capteurs peuvent être placés sur le carter 7 au niveau de la turbine 4, de l'un des compresseurs 1, 2 ou entre ces compresseurs. Bien entendu, il est préférable que le capteur de vibration soit placé en regard du ou des disques mobiles à surveiller.

La figure 1 montre schématiquement un premier capteur 12a de vibration, placé au niveau du compresseur 2 et un second capteur 12b de vibration placé au niveau de la turbine 4. Il est évident, que le nombre de capteurs de vibrations peut être quelconque et leur emplacement peut varier.

De façon connue, chaque capteur de vibration ou moyen de mesure fourni un signal électrique représentatif des vibrations mécaniques du compresseur ou de la turbine. Après amplification et filtration le signal est converti en des données numériques par un convertisseur analogique-numérique afin d'être analysé numériquement.

En outre, un capteur 16 de vitesse mesure la vitesse de rotation du rotor associé au compresseur et il existe un autre capteur de vitesse (non représenté) qui mesure la vitesse de rotation du rotor associé à la turbine.

Comme le montre de façon très schématique la figure 1, le système de détection d'endommagement selon l'invention, comprend un système de traitement de données 22 comprenant de façon classique, une unité d'interface 23 qui reçoit les données numériques en provenance des capteurs et les transfère dans une unité mémoire 25 afin que ces données soient traités par une unité centrale 24. Par ailleurs, le système de traitement est connecté à un écran et/ou une imprimante, placés par exemple dans le cockpit.

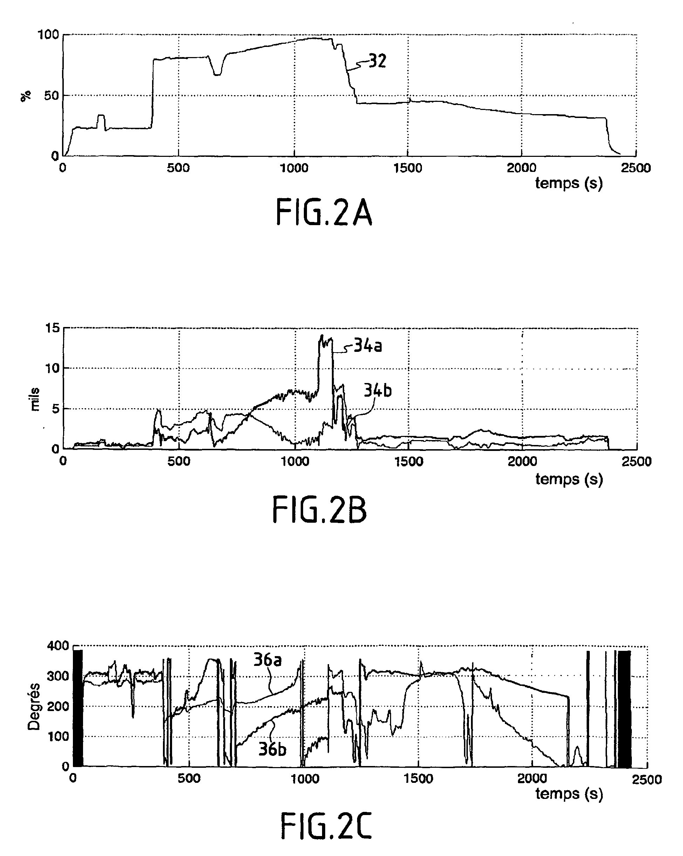

Conformément à l'invention, les figures 2A à 2C illustrent un exemple d'enregistrement de données stockées pendant le vol par l'unité mémoire 25. Ainsi, l'unité mémoire 25 est un moyen de stockage pour stocker les données relatives à la vitesse, l'amplitude et la phase de vibration du rotor pour les traiter à l'issue du vol.

En effet, l'exemple de la figure 2A illustre un spectre 32 décrivant l'évolution de la vitesse N(t) du rotor en fonction du temps en secondes. Dans cet exemple, la vitesse est normalisée par rapport à la vitesse nominale et est donnée sous forme de pourcentage.

La vibration v(t) est caractérisée par son amplitude A(t), c'est-à-dire, par un écart maximal par rapport à une position d'équilibre et par sa fréquence ou pulsation (φ(t). L'amplitude a donc la dimension d'une longueur exprimée ici en micromètre ou en mils et la pulsation peut être exprimée en radian/seconde ou en degré/seconde. D'une manière générale la vibration est exprimée par une variable complexe de module A(t) et d'argument ϕ(t) en radians, de la forme v(t)=A(t)exp(iϕ(t)).

Ainsi, à un instant donné une vibration est définie par une amplitude et par une phase ou angle. Les exemples des figures 2B et 2C illustrent l'amplitude et la phase respectivement des vibrations enregistrées pendant un vol déterminé.

La figure 2B illustre l'évolution de l'amplitude A(t), en µm (mils), en fonction du temps en secondes. Une première courbe 34a d'amplitude A1(t) représente les données mesurées par le premier capteur 12a de vibration. Une seconde courbe 34b d'amplitude A2(t) représente les données mesurées par le second capteur 12b de vibration.

La figure 2C illustre l'évolution de la phase (φ(t), en degrés, en fonction du temps en secondes. Une première courbe 36a de phase φ1(t), représente les données mesurées par le premier capteur 12a de vibration. Une seconde courbe 36b de phase φ2(t), représente les données mesurées par le second capteur 12b de vibration.

A titre d'exemple, le taux d'acquisition des données des figures 2A à 2C, correspond à une donnée par seconde.

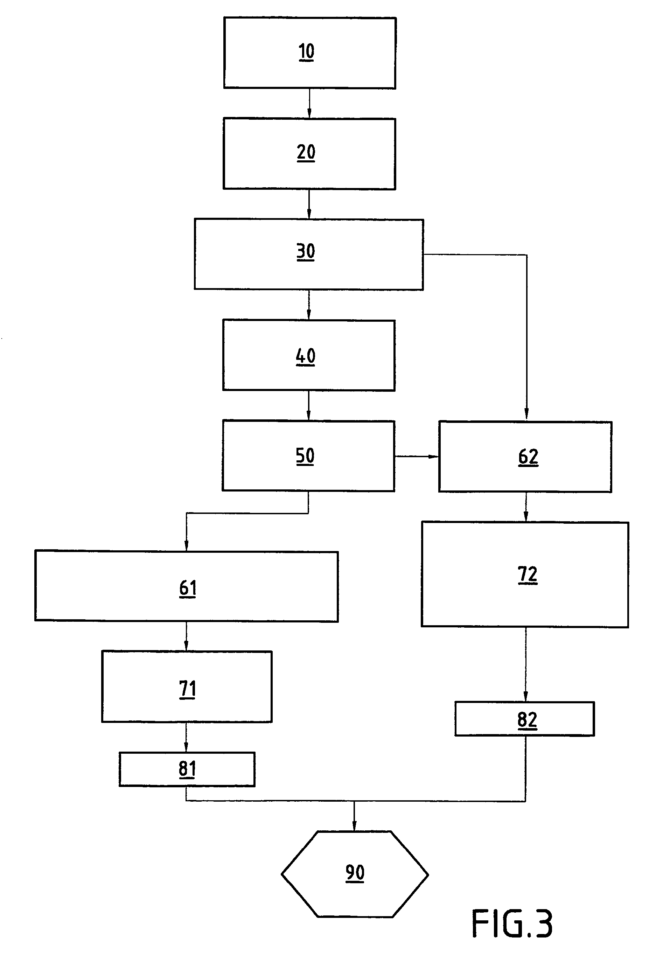

Conformément à l'invention, les figures 3 à 9B illustrent le procédé de détection d'endommagement de rotor d'un moteur d'aéronef.

La figure 3 est un organigramme illustrant ce procédé de détection à la suite d'un vol déterminé. Le processus (voir aussi figure 1) est mis en oeuvre au moyen de programmes stockés en mémoire 25 du système de traitement 22. Le processus est démarré (étape 10) par la lecture de données relatives à la vitesse et à la vibration du rotor, stockées en mémoire 25 pendant le vol.

Ainsi, à l'issue de chaque vol, l'unité centrale lit les données relatives à la vitesse de rotation du rotor (figure 2A), l'amplitude (figure 2B) et la phase (figure 2C) des vibrations, qui ont été acquises par les différents moyens de mesure.

A l'étape 20, la vibration à un instant donné t est exprimée par un vecteur vibration V défini à partir de l'amplitude A(t) et la phase φ(t) à cet instant t, de la vibration du rotor.

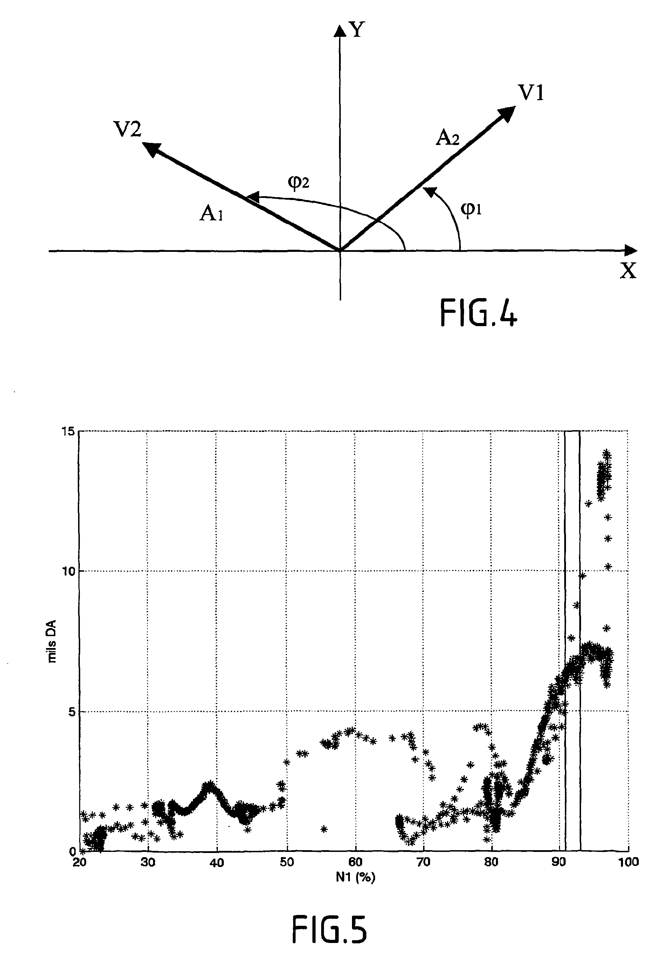

En effet, la figure 4 montre une représentation à un instant donné des vecteurs vibrations V1 et V2, des premier et second capteurs respectivement, en coordonnées polaires. Les longueurs des vecteurs V1 et V2 sont proportionnelles à leur modules A1 et A2 et les angles qu'ils font avec l'axe principal correspondent à leur phases ϕ1 et ϕ2 respectivement.

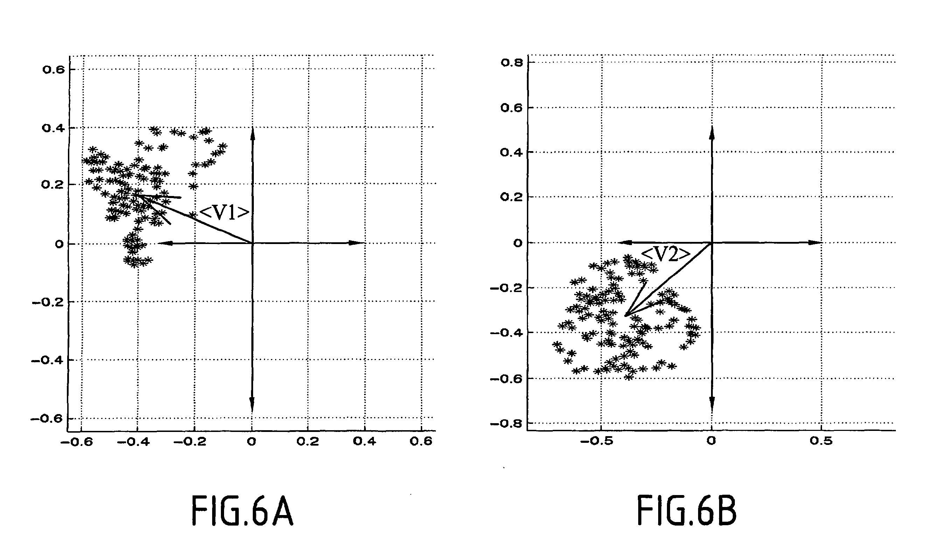

A l'étape 30 (voir aussi figure 5), les vecteurs vibrations, émanant de chaque capteur de vibration, sont paramétrés en fonction de la vitesse du rotor. Ensuite le spectre de la vitesse du rotor est subdivisé en une pluralité d'intervalles de vitesse et par conséquent les vecteurs vibrations sont triés selon ces intervalles.

La subdivision n'est pas forcément régulière et l'amplitude de l'intervalle de vitesse peut correspondre à une valeur comprise entre 1% et 10% de la vitesse nominale du rotor. Il est préférable d'affiner la subdivision à des vitesses élevées du rotor car la vibration, et par conséquent le risque de perte d'aubes, est plus élevée. A titre d'exemple, pour des vitesses rotors normalisées entre 80% et 110%, on peut choisir des subdivisions ou intervalles d'une amplitude de 1%.

Par ailleurs, il est avantageux d'élargir l'amplitude des intervalles lorsque les vitesses sont faibles et même d'éliminer la partie inférieure du spectre de la vitesse, afin de ne pas surcharger la mémoire et le temps de traitement des données. Par exemple, on peut faire une subdivision de 2% ou plus à des vitesses rotors normalisées en dessous de 80% et d'éliminer la partie en dessous de 20%.

En effet, la figure 5 montre un exemple d'une distribution des amplitudes en µm (mils), des vecteurs, déterminées à partir d'un des capteurs, en fonction de la vitesse normalisée du rotor. Dans cet exemple, le spectre de la vitesse du rotor est subdivisé en des intervalles d'une amplitude de 2% et dans un intervalle global compris entre 20% et 100% de la vitesse nominale.

A l'étape 40, les coordonnées du vecteur moyen <V> de vibration sont calculées pour chaque intervalle de vitesse et pour chaque capteur.

La figure 6A illustre un exemple d'un nuage de points représentant les coordonnées cartésiennes de vecteurs des vibrations déterminées à partir du premier capteur, pour un intervalle de vitesse donnée. En particulier, cette figure représente les vecteurs vibrations dans un intervalle de vitesse entre 80% et 82% de la vitesse nominale. Une moyenne vectorielle, définissant un vecteur moyen <V1> dans l'intervalle donné, peut être déterminée en calculant le barycentre du nuage de points. On notera que si le nombre de points représentant les coordonnées des vecteurs est faible, il est préférable pour une meilleure analyse, de ne pas tenir compte de ces points.

De même, la figure 6B représente les coordonnées cartésiennes de vecteurs des vibrations déterminées à partir du second capteur ainsi que leur vecteur moyen <V2> dans un intervalle de vitesse donnée.

A l'étape 50, le vecteur moyen représentant chaque intervalle et chaque capteur est stocké en mémoire.

A partir de l'étape 50, l'évolution de ces vecteurs est analysée par les étapes 61 à 81 et/ou par les étapes 62 à 82.

Ainsi, à l'étape 61, pour chaque intervalle de vitesse et pour chaque capteur, on calcul la différence vectorielle D entre le vecteur moyen <V1d> d'un vol de référence et le vecteur moyen du vol déterminé, bien entendu pour le même intervalle de vitesse. On notera que les vecteurs moyens <V1d> représentant des différents intervalles de vitesses du vol de référence sont préalablement stockés en mémoire 25 du système de traitement 22 (voir figure 1).

Le vol de référence peut correspondre au vol précédent le vol déterminé. Par ailleurs, le vol de référence peut correspondre à un vol associé à un moteur standard de référence, par exemple un moteur d'essai.

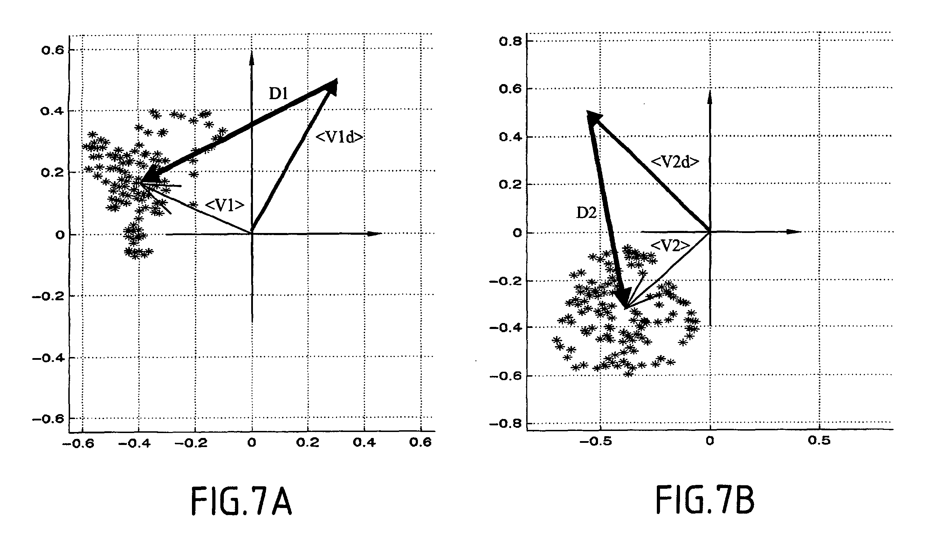

La figure 7A illustre le calcul de la différence vectorielle D1 entre le vecteur moyen <V1d> du vol de référence, par exemple le vol précédent et le vecteur moyen <V1> du vol déterminé, c'est-à-dire du dernier vol, à partir des données stockées en mémoire et relatives au premier capteur. De même la figure 7B illustre le calcul de la différence vectorielle D2 relatif au second capteur.

Dans le cas où cette différence vectorielle, calculée à l'étape 61, dépasse une zone critique autour des coordonnées du vecteur moyen de référence, alors on peut diagnostiquer que le rotor a subi un endommagement, par exemple une rupture d'aube.

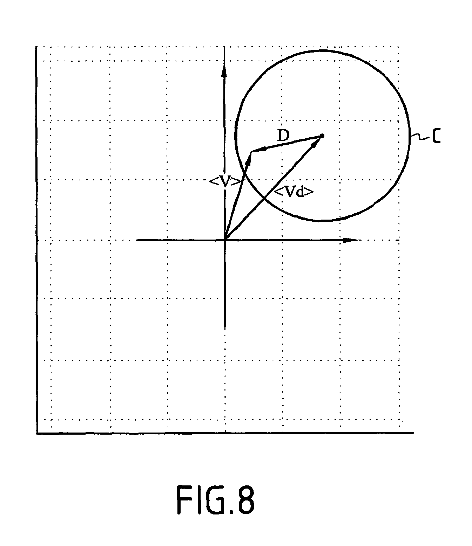

La figure 8 illustre un cercle ayant pour centre les coordonnées du vecteur moyen <Vd> de référence et pour rayon une valeur prédéterminée selon l'emplacement du détecteur. Ainsi, si la différence vectorielle dépasse la zone définie par le cercle C, on peut alors considérer qu'il y a endommagement du rotor. Afin de simplifier le critère de sélection, on peut calculer le module de la différence vectorielle pour pouvoir le comparer à une valeur seuil prédéterminée.

Ainsi, à l'étape 71, on calcul le module d de chaque différence vectorielle D, c'est-à-dire, pour chaque intervalle de vitesse. Ensuite, on stocke les valeurs de ces modules en mémoire à l'étape 81.

Ensuite, à l'étape 90, on compare le module d de la différence vectorielle avec la valeur seuil prédéterminée. Cette valeur seuil peut correspondre à une valeur comprise enture 5,08 µm et 12,70 µm) (2 mils et 5 mils) par exemple.

En effet, le capteur de vibration est plus sensible aux balourds du compresseur qu'à ceux de la turbine. Par ailleurs, la sensibilité des capteurs de vibration dépend aussi du régime moteur.

A titre d'exemple, la sensibilité du capteur varie entre environ 78,74 cm.g/µm et 118,11cm.g/µm (200 cm.g/mils et 300 cm.g/mils), c'est-à-dire, qu'un balourd d'un moment d'environ 200 cm.g correspond à une vibration d'une amplitude de 2,54µm (1 mils)

En général, une rupture d'aube se traduit par un balourd d'environ 2000 cm.g. Ainsi, en tenant compte d'un balourd résiduel normal et des différentes sensibilités des capteurs, la rupture d'aube correspond à une variation d'amplitude de vibration de 5,08 µm et 12,70µm (2 mils à 5 mils)

On notera que, la plage de variation de la valeur seuil peut varier selon le modèle du moteur.

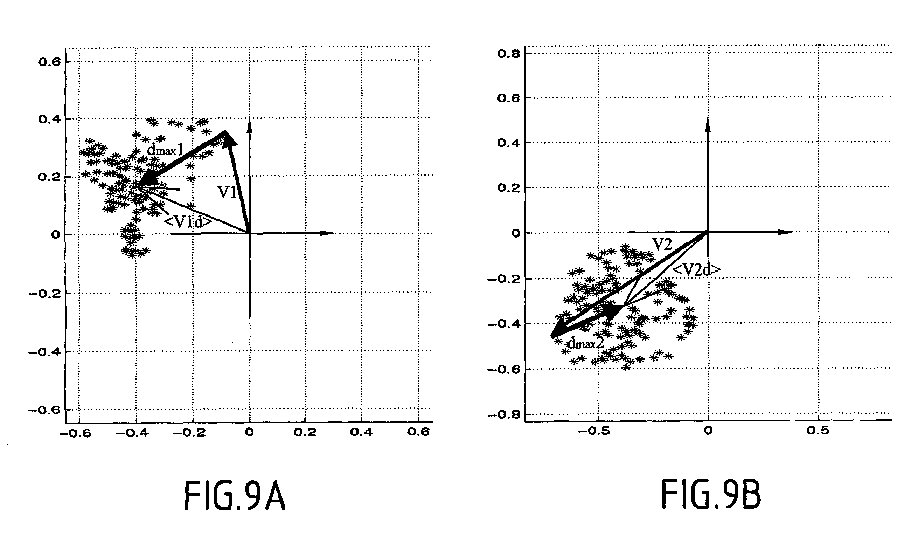

Un processus de calcul d'une dispersion statistique des vecteurs sera maintenant décrit en référence aux étapes 62 à 82. Ainsi, à l'étape 62 (voir aussi figures 9A et 9B) on calcul l'écart type vectoriel de chaque vecteur, défini auparavant à l'étape 30 dans un intervalle de vitesse déterminé. Alors, on calcul dans cet intervalle de vitesse, la différence vectorielle entre chaque vecteur vibration V1 ou V2 (défini à l'étape 30) du vol déterminé et le vecteur vibration moyen <V1d> ou <V2d> (stocké préalablement en mémoire) d'un vol de référence pour un même intervalle de vitesse rotor.

On notera, qu'il est aussi possible de calculer à l'étape 62, la différence vectorielle entre chaque vecteur vibration (défini à l'étape 30) du vol déterminé et le vecteur vibration moyen (stocké en mémoire à l'étape 50) du vol déterminé pour un même intervalle de vitesse rotor.

Alors, on calcul à l'étape 72, le module de la différence vectorielle associée à chaque vecteur vibration et on détermine le module maximal dmax1 ou dmax2. Ensuite le module maximal, c'est-à-dire, le plus grand module associé à l'intervalle de vitesse déterminé est stocké en mémoire à l'étape 82.

Ensuite, à l'étape 90, on compare le plus grand module de l'intervalle de vitesse déterminé avec la valeur seuil prédéterminée.

Lorsqu'un plus grand module (stocké en mémoire à l'étape 82) ou un module d'une différence vectorielle (stocké en mémoire à l'étape 81) excède la valeur seuil prédéterminée, un signal d'alerte est émis sur un écran du cockpit ou sur une imprimante à l'attention du personnel de maintenance. Alors, un examen approprié du moteur doit être réalisé avant tout redémarrage.

Par ailleurs, lorsque le module ou le plus grand module de la différence vectorielle n'excède pas la valeur seuil prédéterminée une mise à jour est réalisée pour les vecteurs moyens du vol référence à partir des données du vol déterminé afin de tenir compte d'une évolution normale du moteur.

Il est aussi envisageable que les données relatives à la vitesse et à la vibration du rotor soit stockées sur un support de stockage amovible afin de traiter ces données par un ordinateur au sol après atterrissage de l'aéronef.

Le procédé de détection d'endommagement de rotor d'un moteur d'aéronef comprenant les étapes ci-dessus et mis en oeuvre à la suite d'un vol déterminé, est particulièrement avantageux en ce que le pilote n'est pas perturbé par ce genre de problèmes de moindre importance. Un autre avantage est le fait que le système de traitement au bord de l'aéronef ne soit pas surchargé.

Cela dit, il est tout à fait possible de détecter l'endommagement du rotor en cours du vol par un procédé semblable à celui de la figure 3.

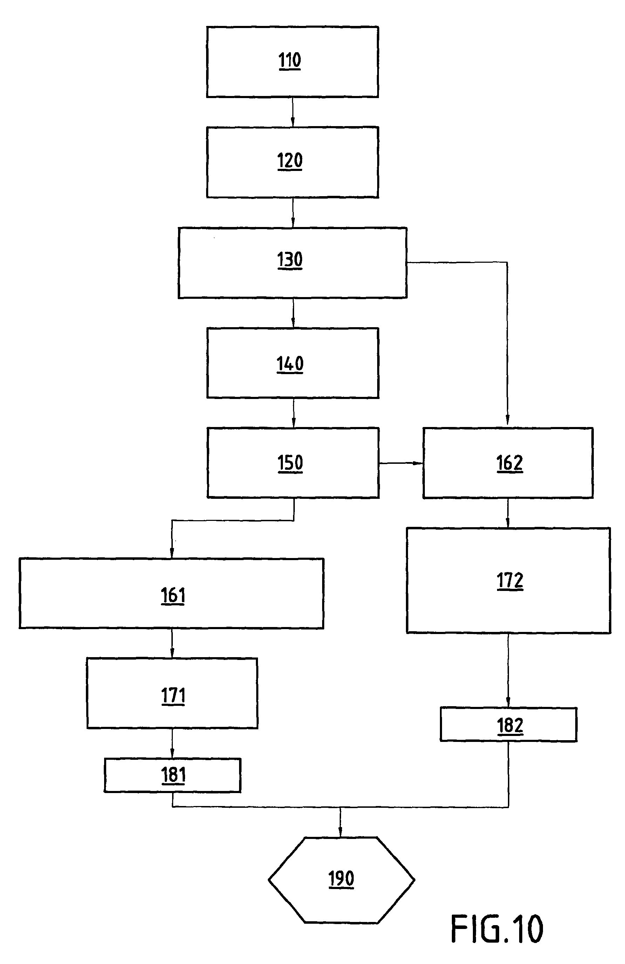

En effet, les étapes de l'organigramme illustré à la figure 10 sont semblables à celui de la figure 3, sauf que le processus démarre à l'étape 110 par la lecture en temps réel de données relatives à la vitesse du rotor ainsi qu'à l'amplitude et à la phase des vibrations du rotor. A l'étape 120, la vibration est exprimée par un vecteur qui est défini par rapport à un intervalle de vitesse rotor déterminé (étape 130). En revanche, à l'étape 140, les coordonnées d'un vecteur moyen de vibration pour un intervalle de vitesse déterminé est calculé à partir des données partielles requises à l'étape 110. Ainsi, le vecteur moyen peut évoluer au cours du vol en s'enrichissant des données ultérieures. A l'étape 150, chaque vecteur moyen calculé est stocké en mémoire en remplaçant éventuellement le vecteur moyen, précédemment stocké et relatif au même intervalle de vitesse. Toutes les autres étapes sont semblables à celles illustres précédemment à la figure 3.

## Revendications

1. Procédé de détection d'endommagement de rotor d'un moteur d'aéronef comprenant des moyens de mesure de vibration et de vitesse pour l' acquisition de données relatives à la vitesse du rotor ainsi qu'à l'amplitude et à la phase des vibrations du rotor pendant un vol déterminé, comprenant les étapes suivantes:
- lecture desdites données acquises,
- calcul d'un vecteur vibration moyen sur un intervalle de vitesse de rotor déterminé à partir desdites données acquises, l'amplitude dudit intervalle de vitesse rotor déterminé correspondant à une valeur comprise entre 1% et 10% de la vitesse nominale du rotor,
- calcul d'une différence vectorielle entre le vecteur vibration moyen dudit vol déterminé et le vecteur vibration moyen d'un vol de référence pour ledit intervalle de vitesse rotor,
- comparaison du module de ladite différence vectorielle avec une valeur seuil prédéterminée,
- émission d'un signal d'alerte lorsque le module de ladite différence vectorielle excède ladite valeur seuil prédéterminée,
et **en ce que** lesdites étapes sont réalisées à l'issue dudit vol déterminé.

2. Procédé de détection selon la revendication 1, **caractérisé en ce qu'**il comporte en outre, les étapes suivantes:
- calcul d'une deuxième différence vectorielle entre chaque vecteur vibration dudit vol déterminé et le vecteur vibration moyen d'un vol de référence pour un même intervalle de vitesse rotor,
- calcul d'un module de ladite deuxième différence vectorielle associée à chaque vecteur vibration afin de choisir un plus grand module,
- comparaison dudit plus grand module avec la valeur seuil prédéterminée, et
- émission d'un signal d'alerte lorsque ledit plus grand module excède la valeur seuil prédéterminée.

3. Procédé de détection selon la revendication 1, **caractérisé en ce qu'**il comporte en outre, les étapes suivantes:
- calcul d'une troisième différence vectorielle entre chaque vecteur vibration dudit vol déterminé et le vecteur vibration moyen dudit vol déterminé à un même intervalle de vitesse rotor,
- calcul d'un module de ladite troisième différence vectorielle associée à chaque vecteur vibration afin de choisir un plus grand module,
- comparaison dudit plus grand module avec la valeur seuil prédéterminée, et
- émission d'un signal d'alerte lorsque ledit plus grand module excède la valeur seuil prédéterminée.

4. Procédé de détection selon l'une quelconque des revendications 1 à 3, **caractérisé en ce que** le vol de référence correspond au vol précédent dudit vol déterminé.

5. Procédé de détection selon l'une quelconque des revendications 1 à 3, **caractérisé en ce que** le vol de référence correspond à un vol associé à un moteur standard de référence.

6. Procédé de détection selon l'une quelconque des revendications 1 à 4, **caractérisé en ce qu'**il comporte en outre une étape de mise à jour des vecteurs moyens du vol référence à partir des données dudit vol déterminé lorsque le module ou le plus grand module de la différence vectorielle n'excède pas la valeur seuil prédéterminée.

7. Procédé de détection selon l'une quelconque des revendications 1 à 6, **caractérisé en ce que** la valeur seuil est prédéterminée selon l'emplacement du moyen de détection de vibration et correspond à une valeur comprise entre 5,08 µm et 12,70 µm (2 mils et 5 mils).

8. Système de détection d'endommagement de rotor d'un moteur d'aéronef muni des moyens de mesure de vibration et de vitesse pour l'acquisition de données relatives à la vitesse du rotor ainsi qu'à l'amplitude et à la phase des vibrations du rotor pendant un vol déterminé, comprenant :
- un moyen de lecture desdites données acquises,
- un moyen de calcul de vecteurs vibrations en fonction de la vitesse du rotor,
- un moyen de calcul d'une pluralité d'intervalles de vitesse de rotor à partir desdites données acquises,
- un moyen de calcul d'un vecteur vibration moyen sur un intervalle de vitesse de rotor déterminé à partir desdites données acquises, l'amplitude dudit intervalle de vitesse rotor déterminé correspondant à une valeur comprise entre 1% et 10% de la vitesse nominale du rotor,
- un moyen de calcul d'une différence vectorielle entre le vecteur vibration moyen dudit vol déterminé et le vecteur vibration moyen d'un vol de référence pour ledit intervalle de vitesse rotor,
- un moyen de comparaison du module de ladite différence vectorielle avec une valeur seuil prédéterminée,
- un moyen d'émission d'un signal d'alerte lorsque le module de ladite différence vectorielle excède ladite valeur seuil prédéterminée, et
- un moyen de stockage pour stocker lesdites données relatives à la vitesse, l'amplitude et la phase de vibration du rotor pour les traiter à l'issue dudit vol déterminé.

9. Système de détection selon la revendication 8, **caractérisé en ce qu'**il comprend en outre :
- un moyen de calcul d'une deuxième différence entre chaque vecteur vibration dudit vol déterminé et le vecteur vibration moyen d'un vol de référence pour un même intervalle de vitesse rotor,
- un moyen de calcul d'un module de ladite deuxième différence vectorielle associée à chaque vecteur vibration et de choisir un plus grand module,
- un moyen de comparaison dudit plus grand module avec la valeur seuil prédéterminée, et
- un moyen d'émission d'un signal d'alerte lorsque ledit plus grand module excède la valeur seuil prédéterminée.

10. Système de détection selon la revendication 8, **caractérisé en ce qu'**il comporte en outre, les étapes suivantes:
- un moyen de calcul d'une troisième différence vectorielle entre chaque vecteur vibration dudit vol déterminé et le vecteur vibration moyen dudit vol déterminé à un même intervalle de vitesse rotor,
- un moyen de calcul d'un module de ladite troisième différence vectorielle associée à chaque vecteur vibration afin de choisir un plus grand module,
- un moyen de comparaison dudit plus grand module avec la valeur seuil prédéterminée, et
- un moyen d'émission d'un signal d'alerte lorsque ledit plus grand module excède la valeur seuil prédéterminée.

11. Système de détection selon l'une quelconque des revendications 8 à 10, **caractérisé en ce qu'**il comporte au moins un moyen de mesure de vibration sur au moins un plan radial du moteur.

12. Moteur d'aéronef comprenant un compresseur munis de premiers disques rotatifs et une turbine muni de seconds disques rotatifs, **caractérisé en ce qu'**il comporte un système de détection selon les revendications 8 à 11.

13. Moteur d'aéronef selon la revendication 12, **caractérisé en ce que** le système de détection comprend un premier moyen de mesure de vibration au niveau d'un des premiers disques rotatifs et un second moyen de mesure de vibration au niveau des seconds disques rotatifs.

14. Programme informatique **caractérisé en ce qu'**il est conçu pour mettre en oeuvre le procédé selon l'une quelconque des revendications 1 à 7 lorsqu'il est exécuté par un ordinateur.

## Claims

1. A method of detecting damage to the rotor of an aircraft engine including means for measuring vibration and speed in order to acquire data relating to rotor speed and to the amplitude and the phase of rotor vibrations during a determined flight, the method comprising the following steps:
■ reading said acquired data;
■ calculating a mean vibration vector over a determined rotor speed range on the basis of said acquired data, the amplitude of said determined rotor speed range corresponding to a value of 1% to 10% of the nominal speed of the rotor;
■ for said rotor speed range, calculating a vector difference between the mean vibration vector of said determined flight and the mean vibration vector of a reference flight;
■ comparing the modulus of said vector difference with a predetermined threshold value; and
■ issuing a warning signal when the modulus of said vector difference exceeds said predetermined threshold value;
and in that said steps are performed after said determined flight has been completed.

2. A detection method according to claim 1, **characterised in that** it further comprises the following steps:
■ for said rotor speed range, calculating a second vector difference between each vibration vector of said determined flight and the mean vibration vector of a reference flight;
■ calculating the modulus of said second vector difference associated with each vibration vector in order to select the maximum modulus;
■ comparing said maximum modulus with the predetermined threshold value; and
■ issuing a warning signal when said maximum modulus exceeds the predetermined threshold value.

3. A detection method according to claim 1, **characterised in that** it further comprises the following steps:
■ for said rotor speed range, calculating a third vector difference between each vibration vector of said determined flight and the mean vibration vector of said determined flight;
■ calculating a modulus for said third vector difference associated with each vibration vector in order to select a maximum modulus;
■ comparing said maximum modulus with the predetermined threshold value; and
■ issuing a warning signal when said maximum modulus exceeds the predetermined threshold value.

4. A detection method according to any one of claims 1 to 3, **characterised in that** the reference flight corresponds to the flight preceding said determined flight.

5. A detection method according to any one of claims 1 to 3, **characterised in that** the reference flight corresponds to a flight associated with a standard, reference engine.

6. A detection method according to any one of claims 1 to 4, **characterised in that** it further comprises a step of updating the mean vectors of the reference flight from the data of said determined flight whenever the modulus or the maximum modulus of the vector difference does not exceed the predetermined threshold value.

7. A detection method according to any one of claims 1 to 6, **characterised in that** the threshold value is determined depending on the location of the vibration detection means and correspond to a value lying in the range 5.08 µm to 12.70 µm (2 mils to 5 mils).

8. A system for detecting damage to the rotor of an aircraft engine provided with vibration measurement means and speed measurement means for acquiring data relating to the speed of the rotor and also to the amplitude and the phase of rotor vibration during a determined flight, the system comprising:
■ means for reading said acquired data;
■ means for calculating vibration vectors as a function of rotor speed;
■ means for calculating a plurality of rotor speed ranges on the basis of said acquired data;
■ means for calculating a mean vibration vector over a determined rotor speed range on the basis of said acquired data;
■ means for calculating a vector difference between the mean vibration vector of said determined flight and the mean vibration vector of a reference flight for said rotor speed range;
■ means for comparing the modulus of said vector difference with a predetermined threshold value;
■ means for issuing a warning signal when said modulus of said vector difference exceeds said predetermined threshold value; and
■ storage means for storing said data relating to the speed, the amplitude, and the phase of vibration of the rotor to enable them to be processed after said determined flight has been completed.

9. A detection system according to claim 8, **characterised in that** it further comprises:
■ means for calculating a second difference between each vibration vector of said determined flight and the mean vibration vector of a reference flight for said rotor speed range;
■ means for calculating a modulus for said second vector difference associated with each vibration vector and for selecting the maximum modulus;
■ means for comparing said maximum modulus with the predetermined threshold value; and
■ means for issuing a warning signal when said maximum modulus exceeds the predetermined threshold value.

10. A detection system according to claim 8, **characterised in that** it further comprises:
■ means for calculating a third vector difference between each vibration vector of said determined flight and the mean vibration vector of said determined flight for said rotor speed range;
■ means for calculating a modulus of said third vector difference associated with each vibration vector in order to select a maximum modulus;
■ means for comparing said maximum modulus with the predetermined threshold value; and
■ means for issuing a warning signal when said maximum modulus exceeds the predetermined threshold value.

11. A detection system according to any one of claims 8 to 10, **characterised in that** it includes at least one means for measuring vibration in a radial plane of the engine.

12. An aircraft engine comprising a compressor fitted with first rotary disks and a turbine fitted with second rotary disks, the engine being **characterised in that** it includes a detection system according to claims 8 to 11.

13. An aircraft engine according to claim 12, **characterised in that** the detection system comprises first vibration measurement means at one of the first rotary disks and second vibration measurement means at the second rotary disks.

14. A computer program, **characterised in that** it is designed to implement the method according to any one of claims 1 to 7 when executed by a computer.

## Patentansprüche

1. Verfahren zur Detektion eines Rotorschadens eines Flugzeugtriebwerks, umfassend Mittel zur Messung von Vibration und Geschwindigkeit für die Erfassung von Daten bezüglich der Geschwindigkeit des Rotors sowie der Amplitude und der Phase der Vibrationen des Rotors während eines festgelegten Fluges, umfassend die folgenden Schritte:
- Auslesen der erfaßten Daten,
- Berechnen eines Vibrationsvektors, der über ein vorbestimmtes Rotorgeschwindigkeitsintervall gemittelt ist aus den erfaßten Daten, der Amplitude des vorbestimmten Rotorgeschwindigkeitsintervalls, die einem Wert zwischen 1% und 10% der Nominalgeschwindigkeit des Rotors entspricht,
- Berechnen einer Vektordifferenz zwischen dem gemittelten Vibrationsvektor des vorbestimmten Fluges und dem gemittelten Vibrationsvektor eines Referenzfluges für das Rotorgeschwindigkeitsintervall,
- Vergleichen des Moduls der Vektordifferenz mit einem vorbestimmten Schwellenwert,
- Aussenden eines Warnsignals, wenn das Modul der Vektordifferenz den vorbestimmten Schwellenwert überschreitet,
und **dadurch**, **daß** die Schritte von dem vorbestimmten Fluges aus durchgeführt werden.

2. Detektionsverfahren nach Anspruch 1, **dadurch gekennzeichnet, daß** es außerdem die folgenden Schritte umfaßt:
- Berechnen einer zweiten Vektordifferenz zwischen jeder Vektorvibration des vorbestimmten Fluges und des gemittelten Vibrationsvektors eines Referenzfluges für ein gleiches Rotorgeschwindigkeitsintervall,
- Berechnen eines Moduls der zweiten Vektordifferenz, die jedem Vibrationsvektor zugeordnet ist, um ein größeres Modul zu wählen,
- Vergleichen des größeren Moduls mit dem vorbestimmten Schwellenwert und
- Aussenden eines Warnsignals, wenn das größere Modul den vorbestimmten Schwellenwert überschreitet.

3. Detektionsverfahren nach Anspruch 1, **dadurch gekennzeichnet, daß** es außerdem die folgenden Schritte umfaßt:
- Berechnen einer dritten Vektordifferenz zwischen jeder Vektorvibration des vorbestimmten Fluges und des gemittelten Vibrationsvektors des vorbestimmten Fluges bei einem selben Rotorgeschwindigkeitsintervall,
- Berechnen eines Moduls der dritten Vektordifferenz, die jeder Vektorvibration zugeordnet ist, um ein größeres Modul zu wählen,
- Vergleichen des größeren Moduls mit dem vorbestimmten Schwellenwert, und
- Aussenden eines Warnsignals, wenn das größte Modul den vorbestimmten Schwellenwert überschreitet.

4. Detektionsverfahren nach einem der Ansprüche 1 bis 3, **dadurch gekennzeichnet, daß** der Referenzflug einem dem vorbestimmten Flug vorangehenden Flug entspricht.

5. Detektionsverfahren nach einem der Ansprüche 1 bis 3, **dadurch gekennzeichnet, daß** der Referenzflug einem Flug entspricht, der mit einem Referenzstandardtriebwerk verbunden ist.

6. Detektionsverfahren nach einem der Ansprüche 1 bis 4, **dadurch gekennzeichnet, daß** es außerdem einen Aktualisierungsschritt der gemittelten Vektoren des Referenzfluges aus Daten des vorbestimmten Fluges umfaßt, wenn das Modul oder das größere Modul der Vektordifferenz nicht den Schwellenwert überschreitet.

7. Detektionsverfahren nach einem der Ansprüche 1 bis 6, **dadurch gekennzeichnet, daß** der Schwellenwert gemäß dem Ort des Vibrationsdetektionsmittels vorbestimmt wird und einem Wert entspricht, der zwischen 5,08 µm und 12,70 µm (2 mils und 5 mils) liegt.

8. System zur Detektion eines Rotorschadens eines Flugzeugtriebwerks, das ausgerüstet ist mit Mitteln zur Messung von Vibration und Geschwindigkeit zur Erfassung von Daten bezüglich der Geschwindigkeit des Rotors sowie der Amplitude und der Phase der Vibrationen des Rotors während eines vorbestimmten Fluges, umfassend:
- ein Auslesemittel der erfaßten Daten,
- ein Mittel zur Berechnung von Vibrationsvektoren in Abhängigkeit der Geschwindigkeit des Rotors,
- ein Mittel zur Berechnung einer Vielzahl von Rotorgeschwindigkeitsintervallen aus den erfaßten Daten,
- ein Mittel zur Berechnung eines Vibrationsvektors, der gemittelt ist über ein vorbestimmtes Rotorgeschwindigkeitsintervall aus den erfaßten Daten, der Amplitude des vorbestimmten Rotorgeschwindigkeitsintervalls, das einem Wert zwischen 1 % und 10% der Nominalgeschwindigkeit des Rotors entspricht,
- ein Mittel zur Berechnung eines Vibrationsvektors, der über ein vorbestimmtes Rotorgeschwindigkeitsintervall gemittelt ist aus den erfaßten Daten, der Amplitude des vorbestimmten Rotorgeschwindigkeitsintervalls, die einem Wert zwischen 1% und 10% der Nominalgeschwindigkeit des Rotors entspricht,
- ein Mittel zur Berechnung einer Vektordifferenz zwischen dem gemittelten Vibrationsvektor des vorbestimmten Fluges und dem gemittelten Vibrationsvektor eines Referenzfluges für das Rotorgeschwindigkeitsintervall,
- ein Mittel zum Vergleich des Moduls der Vektordifferenz mit einem vorbestimmten Schwellenwert,
- ein Mittel zum ein Aussenden eines Warnsignals, wenn das Modul der Vektordifferenz den vorbestimmten Schwellenwert überschreitet, und
- ein Speichermittel zum Speichern der Daten bezüglich der Geschwindigkeit und der Vibrationsphase des Rotors, um sie von dem vorbestimmten Flug aus zu bearbeiten.

9. Detektionssystem nach Anspruch 8, **dadurch gekennzeichnet, daß** es außerdem umfaßt:
- ein Mittel zur Berechnung einer zweiten Vektordifferenz zwischen jeder Vektorvibration des vorbestimmten Fluges und des gemittelten Vibrationsvektors eines Referenzfluges für ein gleiches Rotorgeschwindigkeitsintervall,
- ein Mittel zur Berechnung eines Moduls der zweiten Vektordifferenz, die jedem Vibrationsvektor zugeordnet ist und um ein größeres Modul zu wählen,
- ein Mittel zum Vergleich des größeren Moduls mit dem vorbestimmten Schwellenwert und
- ein Mittel zum Aussenden eines Warnsignals, wenn das größere Modul den vorbestimmten Schwellenwert überschreitet.

10. Detektionssystem nach Anspruch 8, **dadurch gekennzeichnet, daß** es außerdem die folgenden Schritte umfaßt:
- ein Mittel zur Berechnung einer dritten Vektordifferenz zwischen jeder Vektorvibration des vorbestimmten Fluges und dem gemitteltem Vibrationsvektor des vorbestimmten Fluges bei einem selben Rotorgeschwindigkeitsintervall,
- ein Mittel zur Berechnung eines Moduls der dritten Vektordifferenz, die jeder Vektorvibration zugeordnet ist, um ein größeres Modul zu wählen,
- ein Mittel zum Vergleich des größten Moduls mit dem vorbestimmten Schwellenwert, und
- ein Mittel zum Aussenden eines Warnsignals, wenn das größere Modul den vorbestimmten Schwellenwert überschreitet.

11. Detektionssystem nach einem der Ansprüche 8 bis 10, **dadurch gekennzeichnet, daß** es wenigstens ein Vibrationsmeßmittel auf wenigstens einer Radialebene des Triebwerkes umfaßt.

12. Flugzeugtriebwerk, umfassend einen Kompressor, der ausgerüstet ist mit ersten Rotorscheiben und einer Turbine, die ausgerüstet ist mit zweiten Rotorscheiben, **dadurch gekennzeichnet, daß** es ein Detektionssystem nach einem der Ansprüche 8 bis 11 umfaßt.

13. Flugzeugtriebwerk nach Anspruch 12, **dadurch gekennzeichnet, daß** das Detektionssystem ein erstes Vibrationsmeßmittel auf der Ebene von einer der ersten Rotorscheiben und ein zweites Vibrationsmeßmittel auf der Ebene der zweiten Rotorscheiben umfaßt.

14. Datenverarbeitungsprogramm, **dadurch gekennzeichnet, daß** es vorgesehen ist, um das Verfahren nach einem der Ansprüche 1 bis 7 auszuführen, wenn es in einem Computer ausgeführt wird.
